# EUROPEAN PATENT APPLICATION

(11) **EP 2 051 202 A1**
(43) Date of publication of application: **22.04.2009**
(21) Application number: 07791728.4
(22) Date of filing: 01.08.2007
(51) Int. Cl.: G06Q 50/00, G05B 19/418

(54) **PRODUCTION SYSTEM CREATING SYSTEM, PRODUCTION SYSTEM CREATING METHOD, AND STORAGE MEDIUM STORING PRODUCTION SYSTEM CREATING PROGRAM FOR ALLOWING COMPUTER TO EXECUTE PRODUCTION SYSTEM CREATING METHOD**

(30) Priority: 10.08.2006 JP 2006217937
(71) Applicant: Class Technology Co., Ltd., Shibuya-ku, Tokyo 151-0053 (JP)
(72) Inventor: YOTSUKURA, Mikio, Class Technology Co., Ltd., Shibuya-ku, Tokyo 1510053 (JP); YOKOYAMA, Hiroshi, Class Technology Co., Ltd., Shibuya-ku, Tokyo 1510053 (JP)
(74) Representative: Warren, Keith Stanley
(86) International application number: PCT/JP2007/065044
(87) International publication number: WO 2008/018333

(57) **Abstract**

To provide a production system creating system that can create a production system of an article by freely combining a plurality of production factors of various types from a superordinate concept toward a subordinate concept thereof. In a production system creating system 10, a plurality of two-term relationships of various types required for creating the production system are extracted from a relational database 18 and a plurality of production factors of various types corresponding to first and second production factors for forming the extracted two-term relationships are also extracted from a factor-type database 17, and while integrating these two-term relationships extracted from the relational database 18, these production factors extracted from the factor-type database 17 are connected in series from the superordinate concept toward the subordinate concept according to the two-term relationships thus integrated to thereby create the production system corresponding to the article.

## Description

### TECHNICAL FIELD

The present invention relates to a production system creating system for creating a production system of an article from a combination of production factors branching from a superordinate concept toward a subordinate concept, and further relates to a production system creating method for creating the production system of the article from the combination of the production factors, and a computer readable storage medium that stores the production system creating program for causing a computer to execute the production system creating method.

### BACKGROUND ART

There is disclosed a production management system that creates a component parts list of a mechanical apparatus by expanding a plurality of parts of various types constituting the mechanical apparatus to a tree structure (refer to Patent Document 1). This system sets a data number of the mechanical apparatus to 000, and sets first part numbers of a first part lying just below it to 100, 200, 300, and so on, sets second part numbers of a second part lying just below the first part number 100 to 110, 120, 130, and sets third part numbers of a third part lying just below the second part number 110 to 111, 112, 113. It is noted that the second part numbers lying below the first part number 200 are 210, 220, 230, and so on, and the second part numbers lying below the first part number 300 are 310, 320, 330, and so on. Meanwhile, the third part numbers lying below the second part number 210 are 211, 212, 213, and the third part numbers lying below the second part number 310 are 311, 312, and 313. In this system, the first part numbers are connected to the data number of the mechanical apparatus, the second part numbers are connected to the first part number, and the third part numbers are connected to the second part number, thereby a plurality of parts that form the mechanical apparatus can be expanded as the tree structure.
Patent Document 1: Japanese Unexamined Patent Publication (Kokai) No. 2004-62526

### DISCLOSURE OF THE INVENTION

### PROBLEM TO BE SOLVED BY THE INVENTION

In the production management system disclosed in the aforementioned patent publication, the component parts of the mechanical apparatus are managed by the component numbers, and the first to third parts specified by the component numbers are arranged in the order of the numbers, so that the specific second part will lie just below the first part and the specific third part will lie just below the second part. Hence, the first to third parts arranged in a tree structure are uniquely defined in this system, and neither a different type of part can be arranged below the first part and a different type of part can be arranged below the second part, nor production factors other than the parts can be incorporated therein, so that a constitution table in which production factors of different types are freely combined with each other cannot be created.

An object of the present invention is to provide a production system creating system and a production system creating method that can create production systems of articles of various types by freely combining a plurality of production factors of different types from a superordinate concept toward a subordinate concept thereof.

### MEANS FOR SOLVING THE PROBLEM

The premise of the present invention for solving the aforementioned problems is a production system creating system for creating a production system of an article from a combination of production factors branching from a superordinate concept toward a subordinate concept.

The present invention in the premise is **characterized in that** the production factors are linked with each other by an upper/lower two-term relationship between an arbitrary first production factor and a second production factor lying just below it, and the production system creating system is provided with a factor-type database for storing a plurality of production factors of different types, and a relational database for storing a plurality of two-term relationships of different types, and uses these production factors to execute production system creating means for creating production systems corresponding to the articles of various types, wherein in the production system creating means, a plurality of two-term relationships of various types required for creating the production system are extracted from the relational database and a plurality of production factors of various types corresponding to the first and second production factors for forming the extracted two-term relationship are also extracted from the factor-type database, these two-term relationships extracted from the relational database are integrated, and these production factors extracted from the factor-type database are connected in series from the superordinate concept toward the subordinate concept according to the two-term relationships thus integrated to thereby create the production systems of the articles of various types.

As one example of the production management system, in the production system creating system, the factor-type database is classified into a plurality of first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationships are stored in the relational database; and in the production system creating means, a plurality of production factors of various types corresponding to the first and second production factors for forming these extracted two-term relationships are extracted from the first to n-th factor-type databases based on the first to n-th factor-type numbers, and while the first to n-th factor-type numbers of the first and second production factors for forming these extracted two-term relationships are referred to, production factors of the same factor-type number in these two-term relationships are combined with each other to thereby integrate a plurality of the extracted two-term relationships of various types.

As another example of the production management system, in the production system creating system, first to n-th departmental numbers for sorting the production factors by department are individually set to these production factors, and departmental production system outputting means for outputting a departmental production system formed only of required production factors among the production systems created by the production system creating means is executed for every department; and in the departmental production system outputting means, the first to n-th departmental numbers of a plurality of production factors of various types corresponding to the first and second production factors for forming these extracted two-term relationships are referred to, and the production system formed only of production factors corresponding to the same departmental number is outputted.

As another example of the production management system, in the production system creating system, each of the production factors stored in the factor-type database can be altered and at least either of the first production factor and the second production factor stored in the relational database can be altered; and in the production system creating means, when each of the production factors stored in the factor-type database, and the first and second production factors stored in the relational database are altered, altered new production factors are used and new two-term relationships formed of the altered first and second production factors are used to thereby integrate the two-term relationships again, and production systems corresponding to the articles of various types are re-created according to the integrated two-term relationships.

The second premise of the present invention for solving the aforementioned problems is a production management creating method that includes a factor-type database for storing a plurality of production factors of various types, and a relational database for storing a plurality of two-term relationships of various types between the production factors linked by an upper/lower two-term relationship between an arbitrary first production factor and a second production factor lying just below it, wherein a plurality of two-term relationships of various types required for creating the production system are extracted from the relational database and a plurality of production factors of various types corresponding to the first and second production factors for forming the extracted two-term relationship are also extracted from the factor-type database, the two-term relationships extracted from the relational database are integrated, the production factors extracted from the factor-type database are connected in series from a superordinate concept toward a subordinate concept thereof according to the integrated two-term relationship to thereby create production systems corresponding to the articles of various types, and created production systems are stored and outputted.

As one example of the production system creating method, the factor-type database is classified into a plurality of first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationships are stored in the relational database; and in the production system creating method, a plurality of production factors of various types corresponding to the first and second production factors for forming these extracted two-term relationships are extracted from the first to n-th factor-type databases based on the first to n-th factor-type numbers, and while the first to n-th factor-type numbers of the first and second production factors for forming these extracted two-term relationships are referred to, production factors of the same factor-type number in these two-term relationships are combined with each other to thereby integrate a plurality of the extracted two-term relationships of various types.

As another example of the production system creating method, in the production system creating method, first to n-th departmental numbers for sorting the production factors by department are individually set to these production factors, the first to n-th departmental numbers of a plurality of production factors of various types corresponding to the first and second production factors for forming these extracted two-term relationships are referred to, and a departmental production system formed only of the production factors corresponding to the same departmental number among the created production systems is outputted.

As another example of the production system creating method, in the production system creating method, each of the production factors stored in the factor-type database can be altered and at least either of the first production factor and the second production factor stored in the relational database can be altered, and when each of the production factors stored in the factor-type database, and the first and second production factors stored in the relational database are altered, altered new production factors are used and new two-term relationships formed of the altered first and second production factors are used to thereby integrate the two-term relationships again, and production systems corresponding to the articles of various types are re-created according to the integrated two-term relationships.

The third premise of the present invention for solving the aforementioned problems is a computer readable storage medium that stores a production system creating program for causing a computer to execute a production system creating method that extracts a plurality of two-term relationships of various types required for creating the production system from a relational database for storing the two-term relationships between the production factors linked by an upper/lower two-term relationship between an arbitrary first production factor and a second production factor lying just below it and also extracts a plurality of production factors of various types corresponding to the first and second production factors for forming the extracted two-term relationships from a factor-type database for storing these production factors, integrates a plurality of two-term relationships of various types extracted from the relational database, connects the production factors extracted from the factor-type database in series from a superordinate concept toward a subordinate concept thereof according to the integrated two-term relationship to thereby create production systems corresponding to the articles of various types, and stores and outputs the created production systems.

### EFFECT OF THE INVENTION

According to the production system creating system and production system creating method in accordance with the present invention, since integrating a plurality of two-term relationships of various types extracted from the relational database and connecting a plurality of production factors of various types extracted from the factor-type database in series from the superordinate concept toward the subordinate concept thereof according to the integrated two-term relationships allow the production systems corresponding to the articles of various types to be created, utilizing the two-term relationship formed of the first and second production factors makes it possible to form various production systems in which production factors of different types are freely combined. In the production system creating system and the production system creating method, while each of the departments shares the factor-type database and the relational database, the production system that can be shared by each of the departments can be formed and the production system can be managed in an integrated manner by the relational database and the factor-type database, so that each department does not need to form the production system independently, thus making it possible to omit useless time and labor due to each of the departments creating and managing a huge number of different production systems individually.

In the production system creating system and the production system creating method that integrate a plurality of the extracted two-term relationships of various types with reference to the factor-type numbers of the first and second production factors that form a plurality of two-term relationships of various types extracted from the relational database to combine the production factors of the same factor-type number with each other, it is possible to reliably combine the mutually associated production factors to each other, thus allowing various production systems to be created, in which a plurality of different types of production factors are freely combined by utilizing the two-term relationships. In the production system creating system and the production system creating method, since each of the production factors is classified into the first to n-th factor-type databases by the first to n-th factor-type numbers set thereto and stored in the factor-type databases, it is possible to group each of the production factors that can be shared by each department for every factor-type according to the first to n-th databases to thereby manage them in an integrated manner, thus making it possible to omit time and labor due to each of the departments managing these production factors individually. In the production system creating system and the production system creating method, it is possible to form the production system that can be shared by each department, from each of the production factors stored in the first to n-th factor-type databases, while each department sharing the relational database and the first to the n-th factor-type databases, thus allowing the production system to be managed in an integrated manner by the relational database and the first to n-th factor-type databases.

In the production system creating system and the production system creating method that output the departmental production system formed only of the required production factors for every department based on the first to n-th departmental numbers individually set to the production factors, since the production system including only the production factors required to be displayed to each department is outputted, the production factor which is not required to be displayed to each department can be omitted from the production system, thus allowing the production system having high utility value and ease-of-use for every department to be provided to the department in real time. In the production system creating system and the production system creating method, each department can utilize the production system formed only of the production factors required for it, thus allowing the working efficiency of each department to be improved.

In the production system creating system and the production system creating method, in which when the production factors stored in the factor-type database, and the first and second production factors stored in the relational database are altered, using the altered production factors and using the new two-term relationships formed of the altered first and second production factors, the two-term relationships are integrated again to thereby re-create the production systems according to the integrated two-term relationships, the alteration of the production factors can be managed in an integrated manner by the factor-type databases, and the alteration of the two-term relationship according to the alteration of the first and second production factors can also be managed in an integrated manner by the relational database, thus allowing the new production system that can be shared by each department to be formed in real time after the alteration of the production factors stored in the factor-type database, and the first and second production factors stored in the relational database. In the production system creating system and the production system creating method, it is not necessary to alter the production factor stored in the factor-type database, and the first and second production factors stored in the relational database for every department to create and manage the production system, thus allowing time and labor due to each of the departments individually altering the production factors stored in the factor-type database and altering the first and second production factors stored in the relational database to be omitted.

In the computer readable storage medium that stores the production system creating program for causing the computer to execute the production system creating method, in which the production factors extracted from the factor-type database are connected in series from the superordinate concept toward the subordinate concept thereof according to the integrated two-term relationship to thereby create production systems corresponding to the articles of various types, and the created production systems are stored and outputted, installing the production system creating program stored therein in each computer as required allows various production systems corresponding to the articles of various types to be created in real time, irrespective of the factor-type of the article.

### BRIEF DESCRIPTION OF THE DRAWINGS

Fig. 1 is a schematic configuration view of a production system creating system shown as one example;
Fig. 2 is a view showing one example of a two-term relationship between production factors stored in a relational database;
Fig. 3 is a view for explaining one example of integration of a plurality of two-term relationships of various types performed by a computer;
Fig. 4 is a view showing a production system outputted by department;
Fig. 5 is a view showing another example of the two-term relationships stored in the relational database;
Fig. 6 is a view for explaining integration of a plurality of two-term relationships of various types shown in Fig. 5;
Fig. 7 is a view showing another example of the two-term relationships stored in the relational database;
Fig. 8 is a view for explaining integration of a plurality of two-term relationships of various types shown in Fig. 7;
Fig. 9 is a view showing another example of the two-term relationships stored in the relational database; and
Fig. 10 is a view for explaining integration of a plurality of two-term relationships of various types shown in Fig. 9.

### EXPLANATIONS OF LETTERS OR NUMERALS

10: Production system creating system
11: Computer
12: Design department
13: Manufacturing department
14: Purchasing department
15: Logistics department
16: Integrated management database
17: Factor-type database
18: Relational database
19: Item database (first factor-type database)
20: Result database (second factor-type database)
21: Process database (third factor-type database)
22: Site database (fourth factor-type database)

### BEST MODE(S) FOR CARRYING OUT THE INVENTION

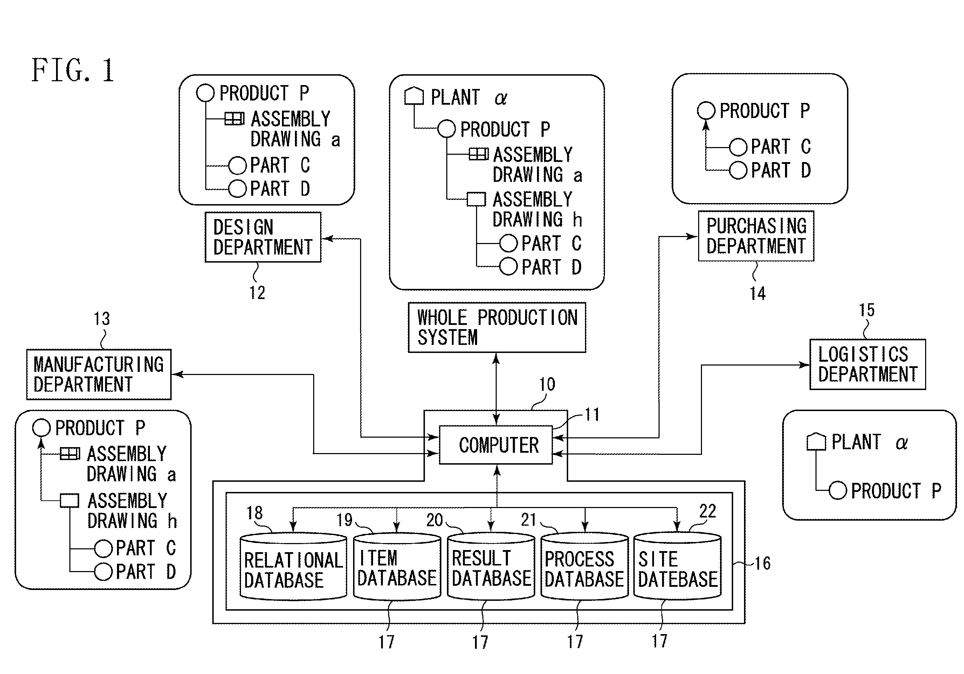

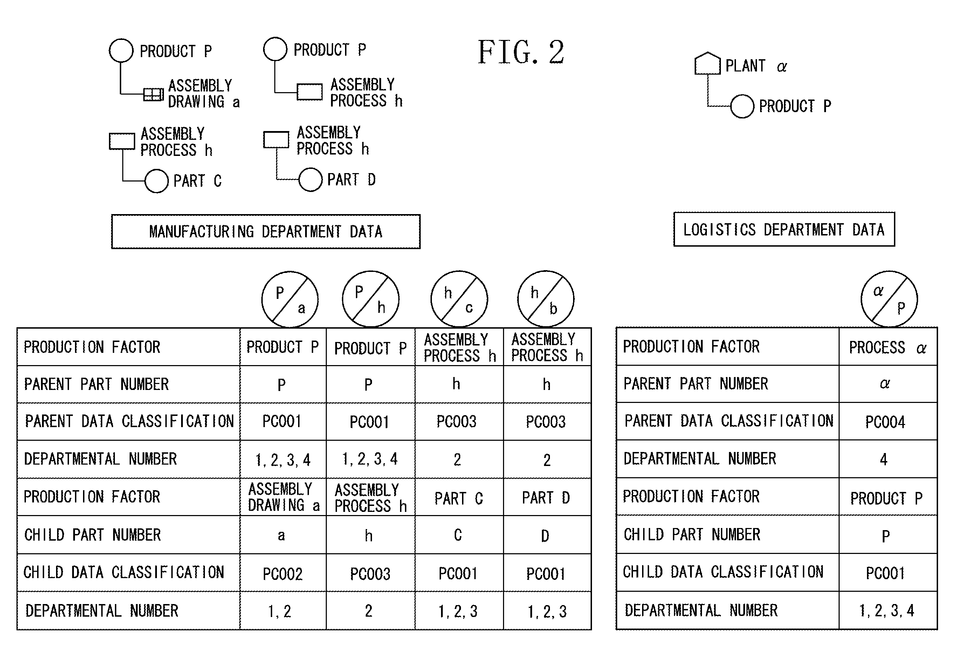

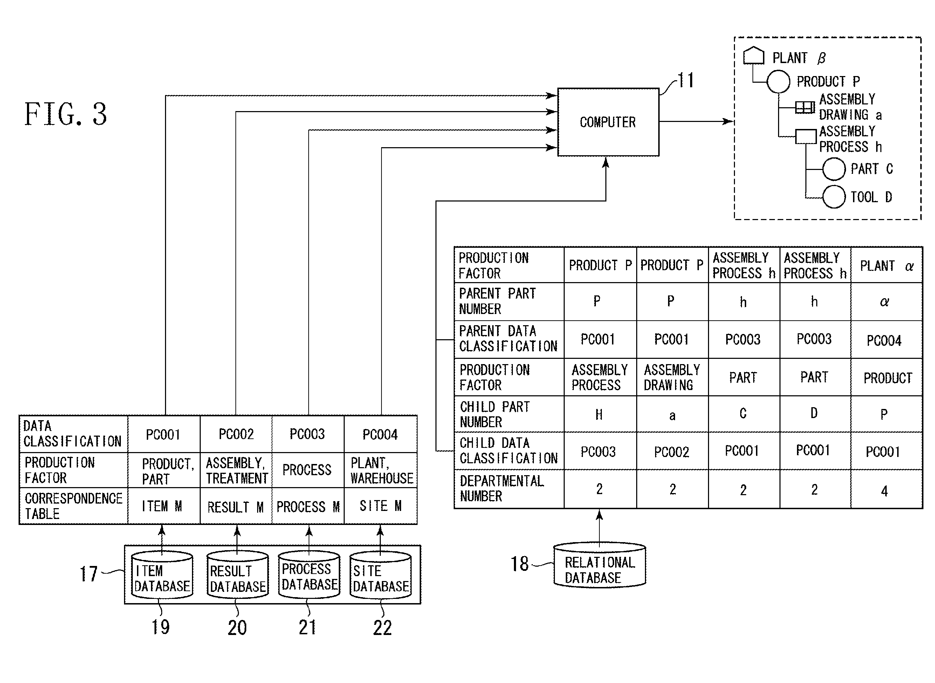

Referring to the appended drawings, details of a production system creating system and a production system creating method in accordance with the present invention will be described as follows. Fig. 1 is a schematic configuration view of a production system creating system 10 shown as one example, while Fig. 2 is a view showing one example of a two-term relationship between production factors stored in a relational database 18. Fig. 3 is a view for explaining one example of integration of a plurality of two-term relationships of various types performed by a computer 11. In Fig. 1, the created whole production system is shown, and further shown is a departmental production system formed only of production factors required for each of departments of a design department 12, a manufacturing department 13, a purchasing department 14, and a logistics department 15. It is noted that the departments are not limited to those shown in the figure, but all the department classifications given by classifying the organizations of public offices, companies, and the like are included. The production system creating system 10 is formed of the computer 11, and an integrated management database 16 for centrally controlling data such as the production factors, the two-term relationships between the production factors, and the like. Although not shown, terminal devices (computers) connected to the computer 11 via interfaces (wire or wireless) are arranged in these departments 12, 13, 14, and 15.

Here, the production factor means each piece of technical information (technical element) essential for manufacturing an article, and a warehouse, a plant, a product, an assembly drawing, a processing instruction, an assembly process, a part, and a tool are illustrated as the production factor (refer to Fig. 1 through Fig. 10) in this embodiment. However, the production factors shown in the figures represent only one example, and the production factors are not limited thereto shown therein. The production factor includes all the production factors to be technical information of the article. The product, the part, and the tool belong to an item (factor-type) which is a member factor of the article, and the assembly drawing and the processing instruction belong to a result (factor-type) which is a design factor of the article. The assembly process belongs to a process (factor-type) which is a process factor of the article, and the warehouse and the plant belong to a site (factor-type) which is a location factor. It is noted that not only a finished product but also a semifinished product are included in the article.

A factor-type number (first to n-th factor-type numbers) for specifying a type of the production factor corresponding to each factor-type is individually set to each of the production factors. The first factor-type number is set to each member factor belonging to the item, and the second factor-type number is set to each design factor belonging to the result. The third factor-type number is set to the process factor belonging to the process, and the fourth factor-type number is set to the site factor belonging to the site. It is noted that the factor-type to which the production factor belongs is not limited to the item, the process, the result, and the site. The factor-type to which the production factor belongs includes all the other factor-types required to manufacture the article, where the fifth to n-th factor-type numbers for specifying the type of the production factor is set to the other factor-types. A departmental number (first to n-th departmental numbers) for sorting these factors by department is individually set to each of the production factors. In this embodiment, a departmental number of the design department 12 is set to No. 1, a departmental number of the manufacturing department 13 is set to No. 2, a departmental number of the purchasing department 14 is set to No. 3, and a departmental number of the logistics department 15 is set to No. 4.

The computer 11 has a central processing unit (CPU or MPU) and a storage unit, and incorporates a high-capacity hard disk therein. Although not shown, input devices such as a keyboard, a mouse, and the like, and output devices such as a display, a printer, and the like are connected to the computer 11 via the interface (wire or wireless). A production system creating program for executing each means of this system 10 is stored in an internal address file of the storage unit. The production system creating program is installed in the storage unit of the computer 11 from an optical disk (storage medium) that stores the program, such as a CD-ROM or the like. It is to be noted that a semiconductor memory and a magnetic disk other than the optical disk may also be used for the storage medium.

When the production system creating program is installed in the computer 11, not only a model of the factor-type of the item, the result, the process, the site, and the like, a model of a plurality of production factors of various types belonging to these factor-types, and a model of the factor-type number and the department corresponding to these factor-types, but also the departmental number for indicating each of the departments 12, 13, 14, and 15 are stored in the hard disk incorporated in the storage unit of the computer 11 or the computer 11. Further, a database file used as the integrated management database 16 (later-described first to fourth factor-type databases and relational database) is created in the hard disk incorporated in the computer 11. The computer 11 extracts required data from the storage unit or the integrated management database 16, and stores data in the storage unit or the integrated management database 16 as required. It is noted that a new factor-type, a new production factor, and a new department can be set freely other than the existing factor-type and production factor in this system 10, so that the production system may also be formed using these new production factors. The new factor-type, the new production factor, and the new department are inputted into the computer 11 from the input device, and are stored in the storage unit or the hard disk. In the system 10, the existing factor-type, production factor, and department may be deleted from the storage unit or the hard disk, and the new factor-type, new production factor, and new department which are newly created may also be deleted from the storage unit or the hard disk.

The central processing unit of the computer 11 activates the production system creating program stored in the internal address file of the storage unit, and executes each means of two-term relationship integrating means for integrating a plurality of two-term relationships of different types, production system creating means for creating a production system corresponding to each article in real time based on the integrated two-term relationship, production system storing means for storing the created production system in the storage unit or the hard disk, production system outputting means for outputting the created production system via the output device, and departmental production system outputting means for outputting the production system by department, according to the program. It is to be noted that input devices such as a keyboard, a mouse, and the like, and output devices such as a display, a printer, and the like are connected also to the terminal device arranged in each of the departments 12, 13, 14, and 15.

The integrated management database 16 is formed of the factor-type database 17 (first to n-th factor-type databases) that stores the data on each of the production factors, and the relational database 18 that stores the two-term relationships between the production factors. The integrated management database 16 transfers data to the computer 11 based on a data transfer instruction from the computer 11, and stores data based on a data storage instruction from the computer 11. In addition, data is altered based on a data alteration instruction from the computer 11. The factor-type database 17 is classified into an item database 19 (first factor-type database) corresponding to the first factor-type number, a result database 20 (second factor-type database) corresponding to the second factor-type number, a process database 21 (third factor-type database) corresponding to the third factor-type number, and a site database 22 (fourth factor-type database) corresponding to the fourth factor-type number. Incidentally, the factor-type database 17 is not limited to those described above, but fifth to n-th factor-type databases for classifying and storing other production factors essential for manufacturing the article for every factor-type may be set in the hard disk.

One example of a procedure for storing in the factor-type database 17 data on a plurality of production factors of various types, which is technical information of an article (1), will be described as follows. When an item is selected from items displayed on the display, an item input area used as a production factor input area and a departmental area corresponding to the item input area will be displayed on the display. A product (P), a part (C), a part (D), and part numbers (P), (C), and (D) (factor-type identification number) thereof are inputted into the item input area via the input device, and the department classifications of the product (P), the part (C), and the part (D) are also inputted into the department-type area. The computer 11 determines that the product (P), the part (C), and the part (D) belong to the item with reference to the factor-type, the production factor, and the factor-type number stored in the storage unit or the hard disk, gives an item data classification (PC001) (first factor-type number) to the product (P), the part (C), and the part (D), and gives departmental numbers (1, 2, 3, 4) to the product (P), the part (C), and the part (D) based on the inputted department classification. The computer 11 stores product data such as the item data classification (PC001) and the departmental numbers (1, 2, 3, 4) of the product (P), a part number (P) for specifying the product (P), and the like in a main file of the item database 19, and also stores part data such as the item data classification (PC001) and departmental numbers (1, 2, 3) of the part (C) and the part (D), a part number (C) for specifying the part (C), a part number (D) for specifying the part (D), and the like, in the main file of the item database 19. Here, the product data includes contents of the product (P) (product name, instruction for use, durable years, amount of money, delivery date, and the like), while the part data includes contents of the part (C) and the part (D) (part name, producing district, instruction for use, durable years, amount of money, delivery date, and the like).

When a result is selected from the items displayed on the display, a result input area used as the production factor input area and a departmental area corresponding to the result input area will be displayed on the display. An assembly drawing (a) and its part number (a) (factor-type identification number) are inputted into the result input area via the input device, and a department classification of the assembly drawing (a) is also inputted into the department-type area. The computer 11 determines that the assembly drawing (a) belongs to the result with reference to the factor-type, the production factor, and the factor-type number stored in the storage unit or the hard disk, gives a result data classification (PC002) (second factor-type number) to the assembly drawing (a), and gives departmental numbers (1, 2) to the assembly drawing (a) based on the inputted department classification. The computer 11 stores assembly drawing data such as the result data classification (PC002) and the departmental numbers (1, 2) of the assembly drawing (a), the part number (a) for specifying the assembly drawing (a), and the like in a main file of the result database 20. The assembly drawing data includes contents of the assembly drawing (a) (details of the drawing, creating department, instruction for use, and the like).

When a process is selected from the items displayed on the display, a process input area used as the production factor input area and a departmental area corresponding to the process input area will be displayed on the display. An assembly process (h) and its part number (h) (factor-type identification number) are inputted into the process input area via the input device, and a department classification of the assembly process (h) is also inputted into the department-type area. The computer 11 determines that the assembly process (h) belongs to the process with reference to the factor-type, the production factor, and the factor-type number stored in the storage unit or the hard disk, gives a process data classification (PC003) (third factor-type number) to the assembly process (h), and gives a departmental number (2) to the assembly process (h) based on the inputted department classification. The computer 11 stores assembly process data such as the process data classification (PC003) and the departmental number (2) of the assembly process (h), the part number (h) for specifying the assembly process (h), and the like in a main file of the process database 21. The assembly process data includes contents of the assembly process (h) (details of the process, assembly location, instruction for use, and the like).

When a site is selected from the items displayed on the display, a site input area used as the production factor input area and a departmental area corresponding to the site input area will be displayed on the display. A plant (α) and its part number (α) (factor-type identification number) are inputted into the site input area via the input device, and a department classification of the plant (α) is also inputted into the department-type area. The computer 11 determines that the plant (α) belongs to the site with reference to the factor-type, the production factor, and the factor-type number stored in the storage unit or the hard disk, gives a site data classification (PC004) (fourth factor-type number) to the plant (α), and gives a departmental number (4) to the plant (α) based on the inputted department classification. The computer 11 stores site data such as the site data classification (PC004) and the departmental number (4) of the plant (α), the part number (α) for specifying the plant (α), and the like in a main file of the site database 22. The site data includes contents of the plant (α) (plant name, plant location, work contents, and the like).

An upper/lower two-term relationship (child-parent relationship) as manufacturing department data and an upper/lower two-term relationship (child-parent relationship) as logistics department data are stored in the relational database 18. In the two-term relationship, the production factors are linked with an arbitrary first production factor (parent production factor) and a second production factor (child production factor) lying just below the first production factor. Based on the two-term relationship, the second production factor is specified from the first production factor, and conversely, the first production factor is specified from the second production factor. A plurality of two-term relationships of various types, such as a two-term relationship between the product (P) and the assembly drawing (a), a two-term relationship between the product (P) and the assembly process (h), a two-term relationship between the assembly process (h) and the part (C), a two-term relationship between the assembly process (h) and the part (D), and a two-term relationship between the plant (α) and the product (P) are stored in the relational database 18 as shown in Fig. 2.

When a relation is selected from the items displayed on the display, a relational area (1) to a relational area (n) used as an input area of the two-term relationship will be displayed on the display. The product (P) and the assembly drawing (a) are inputted into the relational area (1) via the input device, and a department classification (2) is also inputted into a departmental area corresponding to the relational area (1). Further, the part number (P) (factor-type identification number) for specifying the product (P) as a parent part number (first production factor), an item number (PC001) (first factor-type number) as a parent data classification, the part number (a) for specifying the assembly drawing (a) (factor-type identification number) as a child part number (second production factor), and a result number (PC002) (second factor-type number) as a child data classification are inputted. When these data are inputted, the computer 11 stores these data in the relational database 18. In the relational database 18, the product (P) and the assembly drawing (a) are connected to each other, and the product (P) and the assembly drawing (a) are linked with each other based on the two-term relationship. The product (P) and the assembly process (h) are inputted into the relational area (2), and the department classification (2) is also inputted into a departmental area corresponding to the relational area (2). Further, the part number (P) (factor-type identification number) for specifying the product (P) as the parent part number (first production factor), the item number (PC001) (first factor-type number) as the parent data classification, the part number (h) for specifying the assembly process (h) (factor-type identification number) as the child part number (second production factor), and a process number (PC003) (third factor-type number) as the child data classification are inputted. When these data are inputted, the computer 11 stores these data in the relational database 18. In the relational database 18, the product (P) and the assembly process (h) are connected to each other, and the product (P) and the assembly process (h) are linked with each other based on the two-term relationship.

The assembly process (h) and the part (C) are inputted into the relational area (3), and the department classification (2) is also inputted into a departmental area corresponding to the relational area (3). Further, the part number (h) for specifying the assembly process (h) (factor-type identification number) as the parent part number (first production factor), the process number (PC003) (third factor-type number) as the parent data classification, the part number (C) (factor-type identification number) for specifying the part (C) as the child part number (second production factor), and the item number (PC001) (first factor-type number) as the child data classification are inputted. When these data are inputted, the computer 11 stores these data in the relational database 18. In the relational database 18, the assembly process (h) and the part (C) are connected to each other, and the assembly process (h) and the part (C) are linked with each other based on the two-term relationship. The assembly process (h) and the part (D) are inputted into the relational area (4), and the department classification (2) is also inputted into a departmental area corresponding to the relational area (4). Further, the part number (h) for specifying the assembly process (h) (factor-type identification number) as the parent part number (first production factor), the process number (PC003) (third factor-type number) as the parent data classification, the part number (D) (factor-type identification number) for specifying the part (D) as the child part number (second production factor), and the item number (PC001) (first factor-type number) as the child data classification are inputted. When these data are inputted, the computer 11 stores these data in the relational database 18. In the relational database 18, the assembly process (h) and the part (D) are connected to each other, and the assembly process (h) and the part (D) are linked with each other based on the two-term relationship. It is to be noted that the two-term relationship between the product (P) and the assembly drawing (a), the two-term relationship between the product (P) and the assembly process (h), the two-term relationship between the assembly process (h) and the part (C), and the two-term relationship between the assembly process (h) and the part (D) are treated as data of the manufacturing department 12 based on the department classification (2).

The plant (α) and the product (P) are inputted into the relational area (5), and a department classification (4) is also inputted into a departmental area corresponding to the relational area (5). Further, the part number (α) for specifying the plant (α) (factor-type identification number) as the parent part number (first production factor), a site number (PC004) (fourth factor-type number) as the parent data classification, the part number (P) (factor-type identification number) for specifying the product (P) as the child part number (second production factor), the item number (PC001) (first factor-type number) as the child data classification are inputted. When these data are inputted, the computer 11 stores these data in the relational database 18. In the relational database 18, the plant (α) and the product (P) are connected to each other, and the plant (α) and the product (P) are link with each other based on the two-term relationship. The two-term relationship between the plant (α) and the product (P) is treated as data of the logistics department 15 based on the department classification (4).

In this system 10, a plurality of two-term relationships of different types (by department, by factor-type, by factor) extracted from the relational database 18 are integrated, and a plurality of production factors of different types extracted from the first to fourth factor-type databases 19, 20, 21, and 22 are connected in series from a superordinate concept toward a subordinate concept thereof according to the integrated two-term relationship, thereby a production system corresponding to the article (1) is created. Integration of a plurality of two-term relationships of various types and creation of the production system of the article (1) performed by the computer 11 will be described based on Figs. 2 and 3 as follows.

When creation of the production system is instructed via the input device, the computer 11 extracts the two-term relationship between the product (P) and the assembly drawing (a) from the relational database 18 as the manufacturing department data, while also interpreting the item number (PC001) of the parent data classification of the product (P) as the item data classification (PC001) of the item database 19 to extract data of the product (P) from the item database 19 based on the part number (P) and the item data classification (PC001), and also interpreting the result number (PC002) of the child data classification of the assembly drawing (a) as the result data classification (PC002) of the result database 20 to extract data of the assembly drawing (a) from the result database 20 based on the part number (a) and the result data classification (PC002). The computer 11 extracts the two-term relationship between the product (P) and the assembly process (h) from the relational database 18, and also interprets the process number (PC003) of the child data classification of the assembly process (h) as the process data classification (PC003) of the process database 21 to extract data of the assembly process (h) from the process database 21 based on the part number (h) and the process data classification (PC003).

The computer 11 extracts the two-term relationship between the assembly process (h) and the part (C) from the relational database 18, and also interprets the item number (PC001) of the child data classification of the part (C) as the item data classification (PC001) of the item database 19 to extract data of the part (C) from the item database 19 based on the part number (C) and the item data classification (PC001). The computer 11 extracts the two-term relationship between the assembly process (h) and the part (D) from the relational database 18, and also interprets the item number (PC001) of the child data classification of the part (D) as the item data classification (PC001) of the item database 19 to extract data of the part (D) from the item database 19 based on the part number (D) and the item data classification (PC001). The computer 11 extracts the two-term relationship between the plant (α) and the product (P) from the relational database 18 as the logistics department data, while also interpreting the site number (PC004) of the parent data classification of the plant (α) as the site data classification (PC004) of the site database 22 to extract data of the plant (α) from the site database 22 based on the part number (α) and the site data classification (PC004).

When extracting a plurality of two-term relationships of various types between the production factors from the relational database 18 and also extracting a plurality of production factors of various types for forming the two-term relationships from the factor-type database 17, the computer 11 refers to the parent data classification of the first production factor and the child data classification of the second production factor that form the two-term relationship, and combines the production factors of the same data classification in these two-term relationships to thereby integrate a plurality of two-term relationships of various types thus extracted. Specifically, in the two-term relationship between the plant (α) and the product (P), the two-term relationship between the product (P) and the assembly drawing (a), and the two-term relationship between the product (P) and the assembly process (h), it determines that the products (P) are the same common production factor based on the data classification (PC001) and the part number (P), combines the products (P) in those two-term relationships, connects the product (P) to the lower level of the plant (α), and connects the assembly drawing (a) and the assembly process (h) to the lower level of the product (P) in parallel. Next, in the two-term relationship between the product (P) and the assembly process (h), the two-term relationship between the assembly process (h) and the part (C), and the two-term relationship between the assembly process (h) and the part (D), it determines that the assembly processes (h) are the same common production factor from the data classification (PC003) and the part number (h), combines the assembly processes (h) in those two-term relationships, and connects the part (C) and the part (D) to the lower level of the assembly process (h) in parallel. Further, in a route of the product (P), the assembly drawing (a), and the assembly process (h), and a route of the assembly process (h), the part (C), and the part (D), it determines that the assembly processes (h) are the same common production factor from the data classification (PC003) and the part number (h), and combines the assembly processes (h). As a result, a route (technical information route) in which the plant (α) lies at a higher level, the product (P) lies just below it, the assembly drawing (a) and the assembly process (h) lie just below the product (P), and the part (C) and the part (D) lie just below the assembly process (h) is built, and these two-term relationships are integrated (two-term relationship integrating means).

Once the two-term relationships are integrated, the computer 11 will incorporate each of the production factors into a route according to the integrated two-term relationship, and will create a production system in which a plurality of production factors of various types are connected in series from a superordinate concept toward a subordinate concept thereof (production system creating means). In the created production system, the plant (α) lies at the top, and the product (P), the assembly drawing (a), the assembly process (h), the part (C), and the part (D) are located in a line toward the lower level as shown in Fig. 3, The computer 11 stores the production system of the created article (1) in the storage unit or the hard disk (production system storing means), and outputs the production system of the created article (1) via the output device (production system outputting means). It is to be noted that after creating the production system of the article (1), production systems to an article (2) to an article (n) can be created, and the created production systems of the article (2) to the article (n) can be stored in the storage unit or the hard disk (production system storing means); and any one of the production systems of the created article (1) to article (n) can be outputted via the output device (production system outputting means). In the creation of the new production system of the article, not only the existing production factors and two-term relationships can be used, but also a plurality of newly defined production factors of various types can be used and a plurality of new set two-term relationships of various types can be used.

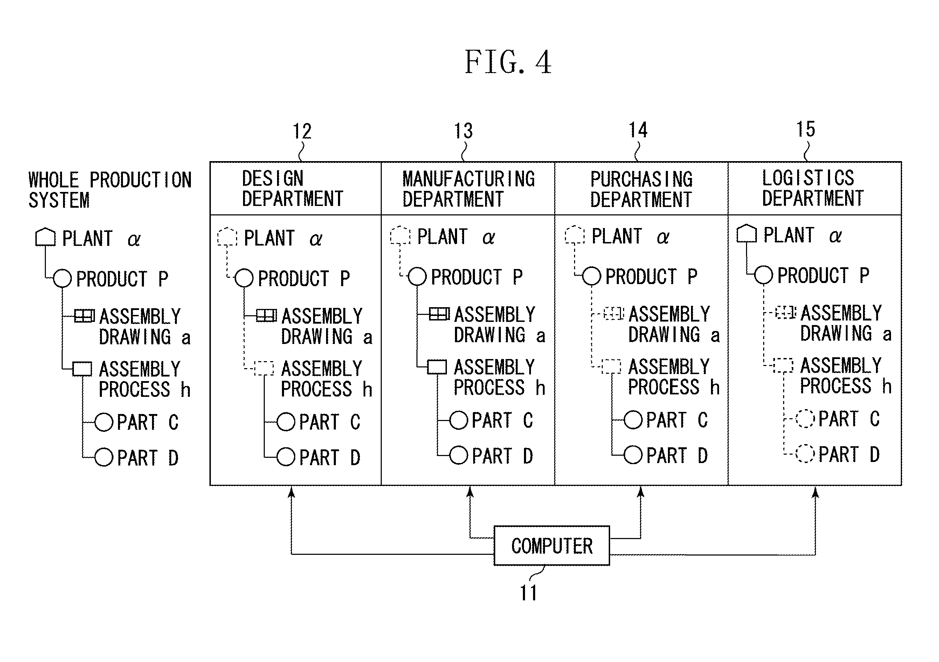

Fig. 4 is a view showing the production system outputted by department. In Fig. 4, only the production factors represented by the solid lines are outputted from the output device arranged in each of the departments 12, 13, 14, and 15, whereas the production factors represented by the dotted lines are not outputted in principle. The computer 11 transfers the created whole production system to the terminal device arranged in each of the departments 12, 13, 14, and 15, causes the display arranged in each of the departments 12, 13, 14, and 15 to display the departmental production system formed only of the required production factors for every department 12, 13, 14, and 15 based on the department-type numbers (1, 2, 3, 4) (departmental production system outputting means), and causes the printer arranged in each of the departments 12, 13, 14, and 15 to print the departmental production system (departmental production system outputting means).

For example, as shown in Figs. 1 and 4, the production system of the article (1) formed of the product (P), the assembly drawing (a), the part (C), and the part (D) to which the departmental number 1 is given is displayed on the display arranged in the design department 12, but the plant (α) to which the departmental number 4 is given, and the assembly process (h) to which the departmental number 2 is given are not displayed thereon. The production system of the article (1) formed of the product (P), the assembly drawing (a), the assembly process (h), the part (C), and the part (D) to which the departmental number 2 is given is displayed on the display arranged in the manufacturing department 13, but the plant (α) to which the departmental number 4 is given is not displayed thereon. Meanwhile, the production system of the article (1) formed of the product (P), the part (C), and the part (D) to which the departmental number 3 is given is displayed on the display arranged in the purchasing department 14, but the assembly drawing (a) and the assembly process (h) to which the departmental numbers 1 and 2 are given and the plant (α) to which the departmental number 4 is given are not displayed thereon. The production system of the article (1) formed of the plant (α) and the product (P) to which the departmental number 4 is given is displayed on the display arranged in the logistics department 15, but the assembly drawing (a), the assembly process (h), the part (C), and the part (D) to which the departmental numbers 1, 2, and 3 are given are not displayed thereon. However, the whole production system may also be displayed on the display in each of the departments 12, 13, 14, and 15 by selecting an overall display.

The production system creating system 10 and the production system creating method extract a plurality of production factors of various types required for the creation of the production system, from a plurality of factor-type databases 17 in which the production factors are classified and stored for every factor-type thereof and also extract a plurality of two-term relationships of various types from the relational database 18, integrate a plurality of two-term relationships of different types, and connects the production factors extracted from the factor-type database 17 in series from a superordinate concept toward a subordinate concept thereof according to the integrated two-term relationship to thereby create production systems corresponding to the articles of various types, so that various production systems in which a plurality of production factors of different types are freely combined may be formed by utilizing the two-term relationship formed of the first and second production factors. In the production system creating system 10 and the production system creating method, it is not necessary for each of the departments 12, 13, 14, and 15 to individually manage each production factor, and for each of the departments 12, 13, 14, and 15 to independently form the production system, thus making it possible to omit useless time and labor due to each of the departments 12, 13, 14, and 15 creating and managing a huge number of production systems which are different from each other. In the production system creating system 10 and the production system creating method, a plurality of production factors of various types and a plurality of two-term relationships of various types are managed in an integrated manner by the integrated management database 16, the production system that can be shared by each of the departments may be formed of each of the production factors stored in the factor-type database 17 and two-term relationships stored in the relational database 18, while each of the departments 12, 13, 14, and 15 sharing the factor-type database 17 and the relational database 18, the production system may be managed in an integrated manner, and the created production system may also be provided to each of the departments 12, 13, 14, and 15 in real time.

In the production system creating system 10 and the production system creating method, since a plurality of production factors of various types are classified into various factor-type databases 19, 20, 21, and 22 based on the first to fourth factor-type numbers set thereto and are stored in these factor-type databases 19, 20, 21, and 22, it is possible to group each of the production factors that can be shared by each of the departments 12, 13, 14, and 15 for every factor-type according to these databases 19, 20, 21, and 22 to thereby manage them in an integrated manner, thus making it possible to omit time and labor due to each of the departments 12, 13, 14, and 15 managing these production factors individually. Moreover, since the production system creating system 10 and the production system creating method output the departmental production system formed only of the required production factors for every department 12, 13, 14 and 15 based on the first to fourth departmental numbers (first to n-th departmental numbers) individually set to the production factor, the production factor which is not required to be displayed to each of the departments 12, 13, 14, and 15 may be omitted from the production system, thus allowing the production system having high utility value and ease-of-use for every department 12, 13, 14, and 15 to be provided to the department in real time. In the production system creating system 10 and the production system creating method, each of the departments 12, 13, 14, and 15 may utilize the production system formed only of production factors required for it, thus allowing the working efficiency of each of the departments 12, 13, 14, and 15 to be improved.

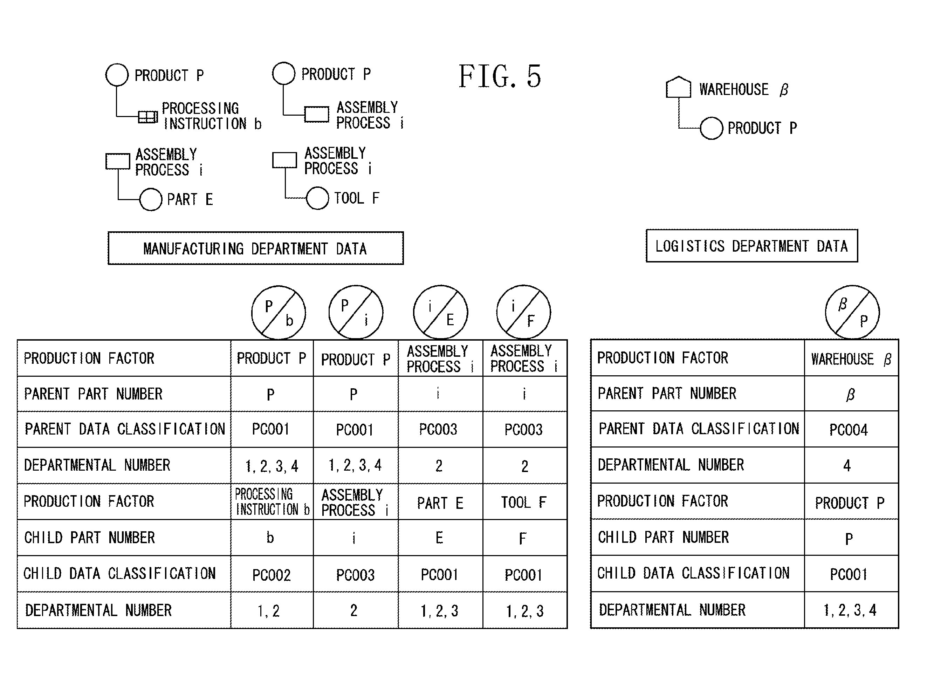

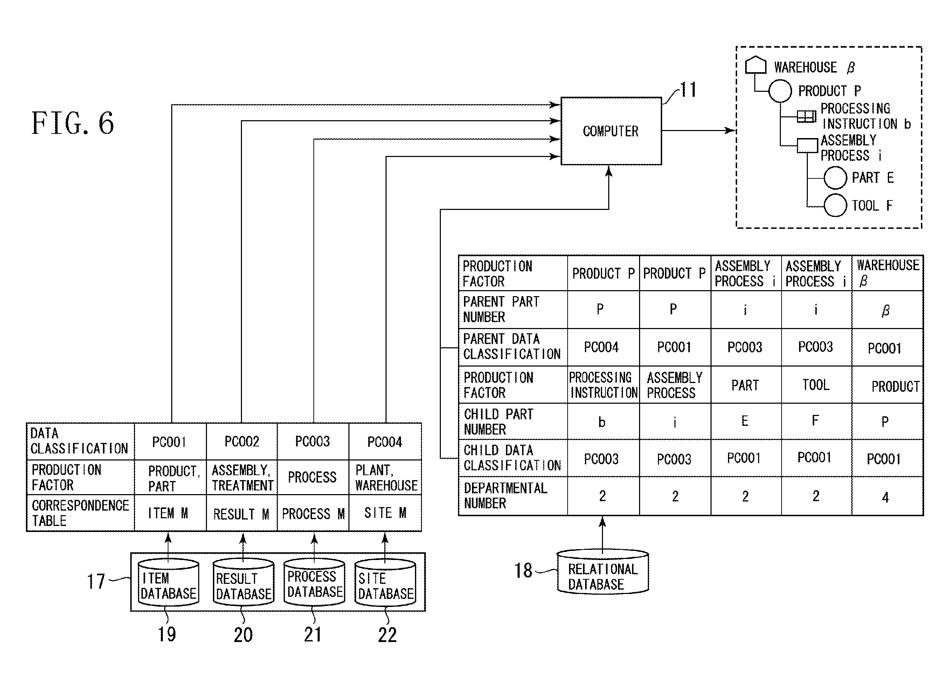

Fig. 5 is a view showing another example of the two-term relationships stored in the relational database 18, while Fig. 6 is a view for explaining integration of a plurality of two-term relationships of various types shown in Fig. 5. In the embodiments shown in Figs. 5 and 6, a part of the production factors stored in the main file of the factor-type database 17 is changed (altered), and a part of the first production factors or the second production factors stored in the main file of the relational database 18 is also changed (altered). In this system 10, each of the production factors stored in the factor-type database 17 can be changed via the input device, and at least either of the first production factors and the second production factors stored in the relational database 18 can be changed. The alteration of the production factors, and the alteration of the first production factors or the second production factors include change, addition, and deletion thereof.

One example of the change of the production factors stored in the factor-type database 17 will be described using a case in which the assembly drawing (a) is changed to a processing instruction (b); the assembly process (h), to an assembly process (i); the part (C), to a part (E); the part (D), to a tool (F); and the plant (α), to a warehouse (β), from a state shown in Fig. 2 as an example as follows. When a production factor change is selected from the items displayed on the display, a production factor change area will be displayed on the display. The assembly drawing (a) before the change is inputted into an old result area (1) among the production factor change areas, the processing instruction (b) and its part number (b) (factor-type identification number) after the change are inputted into a new result area (1), and department classifications (1, 2) of the processing instruction (b) are also inputted into a departmental area corresponding to the new result area (1). The process (h) before the change is inputted into an old process area (1), the assembly process (i) and its part number (i) (factor-type identification number) after the change are inputted into a new process area (1), and a department classification (2) of the assembly process (i) is also inputted into a departmental area corresponding to the new process area (1). The part (C) before the change is inputted into an old item area (1), the part (E) and its part number (E) (factor-type identification number) after the change are inputted into a new item area (1), and department classifications (1, 2, 3) of the part (E) are also inputted into a departmental area corresponding to the new item area (1). Further, the part (D) before the change is inputted into an old item area (2), the tool (F) and its part number (F) (factor-type identification number) after the change are inputted into a new item area (2), and department classifications (1, 2, 3) of the tool (F) are also inputted into a departmental area corresponding to the new item area (2). The plant (α) before the change is inputted into an old site area (1), the warehouse (β) and its part number (β) (factor-type identification number) after the change are inputted into a new site area (1), and a department classification (4) of the warehouse (β) is also inputted into a departmental area corresponding to the new site area (1).

When a change instruction of the production factor is inputted from the input device after inputting these data, the computer 11 deletes the data of the assembly drawing (a) before the change from the main file of the result database 20, deletes the data of the assembly process (h) before the change from the main file of the process database 21, deletes the data of the part (C) and the data of the part (D) before the change from the main file of the item database 19, and deletes the data of the plant (α) before the change from the main file of the site database 22. It is to be noted that the data of the assembly drawing (a) deleted from the main file of the result database 20 is stored into a subfile of the result database 20, and the data of the part (C) and the data of the part (D) deleted from the main file of the item database 19 are stored into a subfile of the item database 19. The data of the plant (α) deleted from the main file of the site database 22 is stored into a subfile of the site database 22.

The computer 11 determines that the processing instruction (b) belongs to the result with reference to the factor-type and factor-type number stored in the storage unit or the hard disk, gives a second factor-type number (PC002) to the processing instruction (b), gives the departmental numbers (1, 2) to the processing instruction (b) based on the inputted department classification, and subsequently stores result data such as the factor-type number (PC002) and the departmental numbers (1, 2) of the processing instruction (b), the part number (b) for specifying the processing instruction (b), and the like, in the main file of the result database 20. The result data includes contents of the processing instruction (b) (details of processing instruction, creating department, instruction for use, and the like). The computer 11 determines that the assembly process (i) belongs to the process with reference to the factor-type and factor-type number stored in the storage unit or the hard disk, gives a third factor-type number (PC003) to the assembly process (i), gives the departmental number (2) to the assembly process (i) based on the inputted department classification, and subsequently stores process data such as the factor-type number (PC003) and the departmental number (2) of the assembly process (i), the part number (i) for specifying the assembly process (i), and the like, in the main file of the process database 21. The process data includes contents of the assembly process (i) (details of the process, assembly location, instruction for use, and the like).

The computer 11 determines that the part (E) belongs to the item with reference to the factor-type and factor-type number stored in the storage unit or the hard disk, gives a first factor-type number (PC001) to the part (E), gives the departmental numbers (1, 2, 3, 4) to the part (E) based on the inputted department classification, and subsequently stores part data such as the factor-type number (PC001) and the departmental numbers (1, 2, 3, 4) of the part(E), the part number (E) for specifying the part (E), and the like, in the main file of the item database 19. The part data includes contents of the part (E) (part name, producing district, instruction for use, durable years, amount of money, delivery date, and the like). The computer 11 determines that the tool (F) belongs to the item with reference to the factor-type and factor-type number stored in the storage unit or the hard disk, gives the first factor-type number (PC001) to the tool (F), gives the departmental numbers (1, 2, 3) to the tool (F) based on the inputted department classification, and subsequently stores tool data such as the factor-type number (PC001) and the departmental numbers (1, 2, 3) of the tool (F), the part number (F) for specifying the tool (F), and the like, in the main file of the item database 19. The tool data includes contents of the tool (F) (tool name, instruction for use, durable years, amount of money, and the like). The computer 11 determines that the warehouse (β) belong to the site with reference to the factor-type and factor-type number stored in the storage unit or the hard disk, gives a fourth factor-type number (PC004) to the warehouse (β), gives the departmental number (4) to the warehouse (β) based on the inputted department classification, and subsequently stores warehouse data such as the factor-type number (PC004) and the departmental number (4) of the warehouse (β), the part number (β) for specifying the warehouse (β), and the like, in the main file of the site database 22. The warehouse data includes contents of the warehouse (β) (warehouse name, warehouse location, work description, and the like).

One example of change of the first and second production factors stored in the relational database 18 will be described using a case in which the assembly drawing (a) (second production factor) is changed to the processing instruction (b) (second production factor); the assembly process (h) (first production factor), to the assembly process (i) (first production factor); the plant (α) (first production factor), to the warehouse (β) (first production factor); the part (C) (second production factor), to the part (E) (second production factor); and the part (D) (second production factor), to the tool (F) (second production factor) as an example as follows.

When a relation change is selected from the items displayed on the display, a relation change area will be displayed on the display. Among the relation change areas, the assembly process (h) before the change is inputted into an old first production factor area (1), the assembly process (i) after the change is inputted into a new first production factor area (1) and also the part number (i) for specifying the assembly process (i) as the parent part number (factor-type identification number) and the process number (PC003) (third factor-type number) as the parent data classification are inputted therein, and the department classification (2) is inputted into a departmental area corresponding to the new first production factor area (1). The plant (α) before the change is inputted into an old first production factor area (2), the warehouse (β) after the change is inputted into a new first production factor area (2) and also the part number (β) for specifying the warehouse (β) as the parent part number (factor-type identification number) and a site number (PC004) (fourth factor-type number) as the parent data classification are inputted therein, and the department classification (4) is inputted into a departmental area corresponding to the new first production factor area (2).

The assembly drawing (a) before the change is inputted into an old second production factor area (1), the processing instruction (b) after the change is inputted into a new second production factor area (1) and also the part number (b) (factor-type identification number) for specifying the processing instruction (b) as the child part number and the result number (PC002) (second factor-type number) as the child data classification are inputted therein, and the department classification (2) is inputted into a departmental area corresponding to the new second production factor area (1). The part (C) before the change is inputted into an old second production factor area (2), the part (E) after the change is inputted into a new second production factor area (2) and also the part number (E) (factor-type identification number) for specifying the part (E) as the child part number and the item number (PC001) (first factor-type number) as the child data classification are inputted therein, and the department classification (2) is inputted into a departmental area corresponding to the second production factor area (2). Further, the part (D) before the change is inputted into an old second production factor area (3), the tool (F) after the change is inputted into a new second production factor area (3) and also the part number (F) (factor-type identification number) for specifying the tool (F) as the child part number, the item number (PC001) (first factor-type number) as the child data classification are inputted therein, and the department classification (2) is inputted into a departmental area corresponding to the second production factor area (3).

When a change instruction of the two-term relationship is inputted from the input device after inputting these data, the computer 11 changes the two-term relationship between the product (P) and the assembly drawing (a) stored in the main file of the relational database 18 into a two-term relationship between the product (P) and the processing instruction (b), changes the two-term relationship between the assembly process (h) and the part (C) into the two-term relationship between the assembly process (i) and the part (E), changes the two-term relationship between the assembly process (h) and the part (D) into the two-term relationship between the assembly process (i) and the tool (F), and changes the two-term relationship between the plant (α) and the product (P) into the two-term relationship between the warehouse (β) and the product (P). It is to be noted that the two-term relationship between the product (P) and the assembly drawing (a), the two-term relationship between the assembly process (h) and the part (C), the two-term relationship between the assembly process (h) and the part (D), and the two-term relationship between the plant (α) and the product (P) before the change are stored into a subfile of the relational database 18. When the two-term relationships are changed, the part number (P) for specifying the product (P) as the parent part number (first production factor), the item number (PC001) which is the parent data classification of the product (P) (first factor-type number), the part number (b) for specifying the processing instruction (b) as the child part number (second production factor), and the result number (PC002) which is the child data classification of the processing instruction (b) (second factor-type number) are stored in the relational database 18. As a result of this, the product (P) and the processing instruction (b) are connected to each other and the product (P) and the processing instruction (b) are linked with each other based on the two-term relationship.

The part number (i) for specifying the assembly process (i) as the parent part number (first production factor), the process number (PC003) (third factor-type number) which is the parent data classification of the assembly process (i), the part number (E) for specifying the part (E) as the child part number (second production factor), the item number (PC001) which is the child data classification of the part (E) (first factor-type number), the part number (F) for specifying the tool (F) as the child part number (second production factor), and the item number (PC001) which is the child data classification of the tool (F) (first factor-type number) are stored in the relational database 18. As a result of this, the assembly process (i) and the part (E) are connected to each other, the assembly process (i) and the part (E) are linked with each other based on the two-term relationship, the assembly process (h) and the tool (F) are connected to each other, and the assembly process (h) and the tool (F) are linked with each other based on the two-term relationship. The part number (β) for specifying the warehouse (β) as the parent part number (first production factor), the site number (PC004) which is the parent data classification of the warehouse (β) (fourth factor-type number), the part number (P) for specifying the product (P) as the child part number (second production factor), and the item number (PC001) which is the child data classification of the product (P) (first factor-type number) are stored in the relational database 18. As a result of this, the warehouse (β) and the product (P) are connected to each other, and the warehouse (β) and the product (P) are linked with each other based on the two-term relationship.

When creation of the production system is instructed via the input device after the production factor and the two-term relationship are changed, the computer 11 uses the changed new production factors, integrates again the new two-term relationships including the two-term relationships formed of the first and second production factors after the change, and re-creates a production system corresponding to each article according to the integrated two-term relationship. The computer 11 extracts the two-term relationship between the product (P) and the processing instruction (b) from the relational database 18 as the manufacturing department data, while also interpreting the item number (PC001) which is the parent data classification of the product (P) as the item data classification (PC001) (first factor-type number) of the item database 19 to extract the data of the product (P) from the item database 19 based on the part number (P) and the item data classification (PC001), and also interpreting the result number (PC002) which is the child data classification of the processing instruction (b) as the result data classification (PC002) (second factor-type number) of the result database 20 to extract data of the processing instruction (b) from the result database 20 based on the part number (b) and the result data classification (PC002). The computer 11 extracts a two-term relationship between the product (P) and the assembly process (i) from the relational database 18, and also interprets the process number (PC003) which is the child data classification of the assembly process (i) as the process data classification (PC003) (third factor-type number) of the process database 21 to extract the data of the assembly process (i) from the process database 21 based on the part number (i) and the process data classification (PC003).

The computer 11 extracts the two-term relationship between the assembly process (i) and the part (E) from the relational database 18, and also interprets the item number (PC001) which is the child data classification of the part E as the item data classification (PC001) (first factor-type number) of the item database 19 to extract data of the part (E) from the item database 19 based on the part number (E) and the item data classification (PC001). The computer 11 extracts the two-term relationship between the assembly process (i) and the tool (F) from the relational database 18, and also interprets the item number (PC001) which is the child data classification of the tool (F) as the item data classification (PC001) (first factor-type number) of the item database 19 to extract data of the tool (F) from the item database 19 based on the part number (F) and the item data classification (PC001). The computer 11 extracts the two-term relationship between the warehouse (β) and the product (P) from the relational database 18 as the logistics department data, while also interpreting the site number (PC004) which is the parent data classification of the warehouse (β) as the site data classification (PC004) (fourth factor-type number) of the site database 22 to extract the data of the warehouse (β) from the site database 22 based on the symbol (β) and the site data classification (PC004).

When extracting a plurality of two-term relationships of various types between the production factors from the relational database 18 and also extracting a plurality of production factors of various types for forming the two-term relationships from the factor-type database 17, the computer 11 determines that the products (P) in the two-term relationship between the warehouse (β) and the product (P), the two-term relationship between the product (P) and the processing instruction (b), and the two-term relationship between the product (P) and the assembly process (i) are the same common production factor based on the data classification (PC001) and the symbol (P), combines the products (P) in those two-term relationships, connects the product (P) to the lower level of the warehouse (β), and connects the processing instruction (b) and the assembly process (i) to the lower level of the product (P) in parallel. Next, it determines that the assembly processes (i) in the two-term relationship between the product (P) and the assembly process (i), the two-term relationship between the assembly process (i) and the part (E), and the two-term relationship between the assembly process (i) and the tool (F) are the same common production factor from the data classification (PC003) and the symbol (i), combines the assembly processes (i) in those two-term relationships, and connects the part (E) and the tool (F) to the lower level of the assembly process (i) in parallel. Further, it determines that the assembly processes (i) in a route of the warehouse (β), the product (P), the processing instruction (b), and the assembly process (i), and a route of the assembly process (i), the part (E), and the tool (F) are the same common production factor based on the data classification (PC003) and the part number (i), and combines the assembly processes (i). As a result of this, a route (technical information route) in which the warehouse (β) lies at a higher level, the product (P) lies just below it, the processing instruction (b) and the assembly process (i) also lie just below the product (P), and the part (E) and the tool (F) lie just below the assembly process (i) is built, and these two-term relationships are integrated (two-term relationship integrating means).

Once the two-term relationships formed of the new first and second production factors are integrated, the computer 11 will incorporate each of the production factors into a route according to the integrated two-term relationship, and will create a production system in which a plurality of production factors of various types are connected in series from a superordinate concept toward a subordinate concept thereof (production system creating means). In the newly created production system, the warehouse (β) lies at the top, and the product (P), the processing instruction (b), the assembly process (i), the part (E), and the tool (F) are located in a line toward the lower level as shown in Fig. 6. The computer 11 stores the production system created after changing the production factors and the first and second production factors in the storage unit or the hard disk (production system storing means), and outputs the created production system via the output device (production system outputting means).

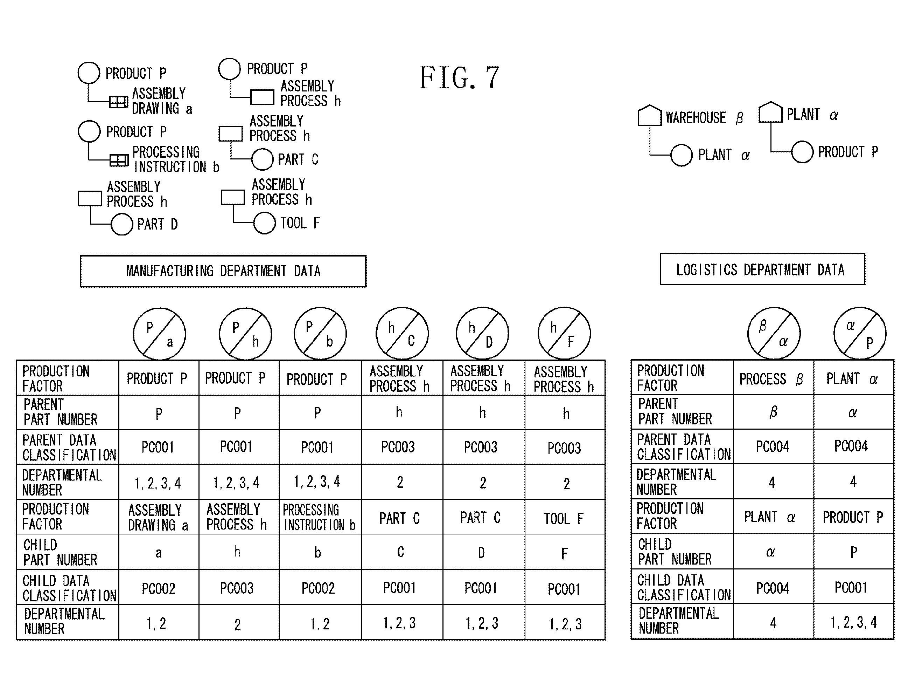

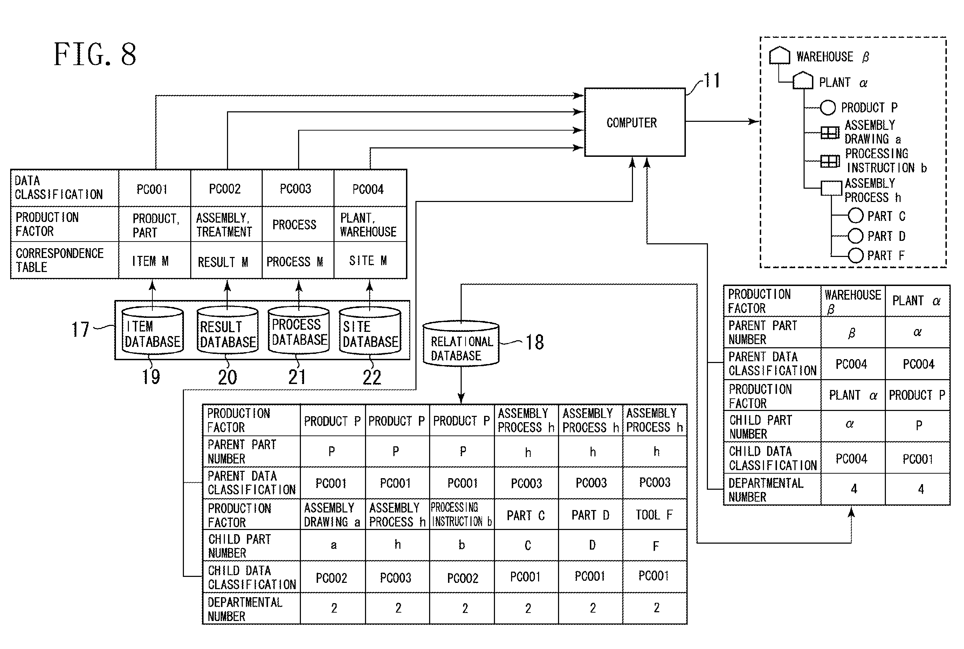

Fig. 7 is a view showing another example of the two-term relationships stored in the relational database 18, while Fig. 8 is a view for explaining integration of a plurality of two-term relationships of various types shown in Fig. 7. In the embodiments shown in Figs. 7 and 8, production factors are added (altered) to the main file of the factor-type database 17, and first production factors or the second production factors are added (altered) to the main file of the relational database 18. One example of addition of the production factors for forming the production system will be described using a case in which the processing instruction (b), the tool (F), and the warehouse (β) are added from the state shown in Fig. 2 as an example as follows. When a result addition is selected from the items displayed on the display, a result addition area and a departmental area corresponding to the result addition area are displayed on the display. The processing instruction (b) and its part number (b) (factor-type identification number) are inputted into the result addition area via the input device, and a department classification of the processing instruction (b) is also inputted into the department-type area. The computer 11 determines that the processing instruction (b) belongs to the result with reference to the factor-type, the production factor, and the factor-type number stored in the storage unit or the hard disk, gives the second factor-type number (PC002) to the processing instruction (b), and gives the departmental numbers (1, 2) to the processing instruction (b) based on the inputted department classification. Subsequently, the computer 11 stores data of the processing instruction such as the factor-type number (PC002) and the departmental numbers (1, 2) of the processing instruction (b), the part number (b) for specifying the processing instruction (b), and the like, in the main file of the result database 20. The data of the processing instruction includes contents of the processing instruction (b) (details of processing instruction, creating department, instruction for use, and the like).

When an item addition is selected from the items displayed on the display, an item addition area and a departmental area corresponding to the item addition area are displayed on the display. The tool (F) and its part number (F) (factor-type identification number) are inputted into the item addition area via the input device, and a department classification of the tool (F) is also inputted into the department-type area. The computer 11 determines that the tool (F) belongs to the items with reference to the factor-type, the production factor, and the factor-type number stored in the storage unit or the hard disk, gives the second factor-type number (PC002) is to the tool (F), and gives the departmental numbers (1, 2, 3) to the tool (F) based on the inputted department classification. Subsequently, the computer 11 stores tool data such as the factor-type number (PC002) and the departmental numbers (1, 2, 3) of the tool (F), the part number (F) for specifying the tool (F), in the main file of the item database 19. The tool data includes contents of the tool (F) (tool name, instruction for use, durable years, amount of money, and the like).

When a site addition is selected from the items displayed on the display, a site addition area and a departmental area corresponding to the site addition area are displayed on the display. The warehouse (β) and its part number (β) are inputted into the site addition area via the input device, and a department classification of the warehouse (β) is also inputted into the department-type area. The computer determines that the warehouse (β) belongs to the site with reference to the factor-type, the production factor, and the factor-type number stored in the storage unit or the hard disk, gives the fourth factor-type number (PC004) to the warehouse (β), gives the departmental number (4) to the warehouse (β) based on the inputted department classification, and subsequently stores warehouse data such as the factor-type number (PC004) and the departmental number (4) of the warehouse (β), the part number (β) for specifying the warehouse (β), and the like, in the main file of the site database 22. The warehouse data includes contents of the warehouse (β) (warehouse location, work description, and the like).

One example of addition of the first and second production factors will be described using a case in which a two-term relationship between the product (P) and the processing instruction (b), a two-term relationship between the assembly process (h) and the tool (F), and a two-term relationship between the warehouse (β) and the plant (α) are added as an example as follows. When a relation addition is selected from the items displayed on the display, a relation addition area (1) to a relation addition area (n) will be displayed on the display. The product (P) and the processing instruction (b) are inputted into the relation addition area (1) among the relation addition areas, and the department classification (2) is also inputted into a departmental area corresponding to the relation addition area (1). Further, the part number (P) for specifying the product (P) as the parent part number (first production factor), the item number (PC001) (first factor-type number) as the parent data classification, the part number (b) for specifying the processing instruction (b) as the child part number (second production factor), and the result number (PC002) (second factor-type number) as the child data classification are inputted. When these data are inputted, the computer 11 stores these data in the relational database 18. In the relational database 18, the product (P) and the processing instruction (b) are connected to each other, and the product (P) and the processing instruction (b) are linked with each other based on the two-term relationship.

The assembly process (h) and the tool (F) are inputted into a relation addition area (2), and the department classification (2) is also inputted into a departmental area corresponding to the relation addition area (2). Further, the part number (h) for specifying the assembly process (h) as the parent part number (first production factor), the process number (PC003) (third factor-type number) as the parent data classification, the part number (F) for specifying the tool (F) as the child part number (second production factor), and the item number (PC001) (first factor-type number) as the child data classification are inputted. When these data are inputted, the computer 11 stores these data in the relational database 18. In the relational database 18, the assembly process (h) and the tool (F) are connected to each other, and the assembly process (h) and the tool (F) are linked with each other based on the two-term relationship. It is to be noted that the two-term relationship between the product (P) and the processing instruction (b), and the two-term relationship between the assembly process (h) and the tool (F), are treated as the data of the manufacturing department 12 based on the department classification (2).

The warehouse (β) and the plant (α) are inputted into a relation addition area (3), and the department classification (4) is also inputted into a departmental area corresponding to the relation addition area (3). Further, the part number (β) for specifying the warehouse (β) as the parent part number (first production factor), the site number (PC004) (fourth factor-type number) as the parent data classification, the part number (α) for specifying the plant (α) as the child part number (second production factor), the site number (PC004) as the child data classification (fourth factor-type number) are inputted. When these data are inputted, the computer 11 stores these data in the relational database 18. In the relational database 18, the warehouse (β) and the plant (α) are connected to each other, and the warehouse (β) and the plant (α) are linked with each other based on the two-term relationship. The two-term relationship between the warehouse (β) and the plant (α) is treated as the data of the logistics department 15 based on the department classification (4).

When creation of the production system is instructed via the input device after the production factor and the two-term relationship are added, the computer 11 uses the existing production factors and the added new production factors to integrate the two-term relationships formed of the existing first and second production factors and the two-term relationships formed of the added first and second production factors, and re-creates production systems corresponding to the articles of various types according to the integrated two-term relationship.

The computer 11 extracts the two-term relationship between the product (P) and the assembly drawing (a) from the relational database 18 as the manufacturing department data, while also interpreting the item number (PC001) of the parent data classification of the product (P) as the item data classification (PC001) (first factor-type number) of the item database 19 to extract the data of the product (P) from the item database 19 based on the parent part number (P) and the item data classification (PC001), and also interpreting the result number (PC002) of the child data classification of the assembly drawing (a) as the result data classification (PC002) (second factor-type number) of the result database 20 to extract data of the assembly drawing (a) from the result database 20 based on the child part number (a) and the result data classification (PC002). The computer 11 extracts the two-term relationship between the product (P) and the assembly process (h) from the relational database 18, and also interprets the process number (PC003) of the child data classification of the assembly process (h) as the process data classification (PC003) (third factor-type number) of the process database 21 to extract the data of the assembly process (h) from the process database 21 based on the child part number (h) and the process data classification (PC003).

The computer 11 extracts the two-term relationship between the product (P) and the processing instruction (b) from the relational database 18, and also interprets the result number (PC002) of the child data classification of the processing instruction (b) as the result data classification (PC002) (second factor-type number) of the result database 20 to extract data of the processing instruction (b) from the result database 20 based on the child part number (b) and the result data classification (PC002). The computer 11 extracts the two-term relationship between the assembly process (h) and the part (C) from the relational database 18, and also interprets the item number (PC001) of the child data classification of the part (C) as the item data classification (PC001) (first factor-type number) of the item database 19 to extract data of the part (C) from the item database 19 based on the child part number (C) and the item data classification (PC001).

The computer 11 extracts the two-term relationship between the assembly process (h) and the part (D) from the relational database 18, and also interprets the item number (PC001) of the child data classification of the part (D) as the item data classification (PC001) (first factor-type number) of the item database 19 to extract data of the part (D) from the item database 19 based on the child part number (D) and the item data classification (PC001). The computer 11 extracts the two-term relationship between the assembly process (h) and the tool (F) from the relational database 18, and also interprets the item number (PC001) of the child data classification of the tool (F) as the item data classification (PC001) (first factor-type number) of the item database 19 to extract the data of the tool (F) from the item database 19 based on the child part number (F) and the item data classification (PC001).

The computer 11 extracts the two-term relationship between the warehouse (β) and the plant (α) from the relational database 18 as the logistics department data, while also interpreting the site number (PC004) of the parent data classification of the warehouse (β) as the site data classification (PC004) (fourth factor-type number) of the site database 22 to extract the data of the warehouse (β) from the site database 22 based on the parent part number (β) and the site data classification (PC004), and also interpreting the site number (PC004) of the parent data classification of the plant (α) as the site data classification (PC004) (fourth factor-type number) of the site database 22 to extract data of the plant (α) from the site database 22 based on the child part number (α) and the site data classification (PC004). The computer 11 extracts the two-term relationship between the plant (α) and the product (P) from the relational database 18.

When extracting a plurality of two-term relationships of various types between the production factors from the relational database 18 and also extracting a plurality of production factors of various types for forming the two-term relationships from the factor-type database 17, the computer 11 refers to the factor-type numbers of the first and second production factors for forming the two-term relationships, and combines the production factors of the same factor-type number among these two-term relationships to thereby integrate a plurality of two-term relationships of various types thus extracted. Specifically, it determines that the plants (α) in the two-term relationship between the warehouse (β) and the plant (α) and the two-term relationship between the plant (α) and the product (P) are the same common production factor based on the data classification (PC002) and the part number (α), combines the plants (α) in those two-term relationships, connects the plant (α) to the lower level of the warehouse (β), and connects the product (P) to the lower level of the plant (α). It determines that the products (P) in the two-term relationship between the product (P) and the assembly drawing (a), the two-term relationship between the product (P) and the assembly process (h), and the two-term relationship between the product (P) and the processing instruction (b) are the same common production factor based on the data classification (PC001) and the part number (P), combines the products (P) in those two-term relationships, and connects the assembly drawing (a), the assembly process (h), and the processing instruction (b) to the lower level of the product (P) in parallel. Next, it determines that the assembly processes (h) in the two-term relationship between the assembly process (h) and the part (C), the two-term relationship between the assembly process (h) and the part (D), and the two-term relationship between the assembly process (h) and the tool (F) are the same common production factor from the data classification (PC003) and the part number (h), combines the assembly processes (h) in those two-term relationships, and connects the part (C), the part (D), and the tool (F) to the lower level of the assembly process (h) in parallel.

Further, it combines the products (P) in a route of the warehouse (β), the plant (α), and the product (P), and a route of the product (P), the assembly drawing (a), the assembly process (h), and the processing instruction (b), and combines the assembly processes (h) in a route of the product (P), the assembly drawing (a), the assembly process (h), and the processing instruction (b), and a route of the assembly process (h), the part (C), the part (D), and the tool (F). As a result, a route (technical information route) in which the warehouse (β) lies at a higher level, the plant (α) lies just below it, the product (P) lies just below the plant (α), the assembly drawing (a), the assembly process (h), and the processing instruction (b) lie just below the product (P), and the part (C), the part (D), and the tool (F) lie just below the assembly process (h) is built, and these two-term relationships are integrated (two-term relationship integrating means).

Once the two-term relationships are integrated, the computer 11 will incorporate each of the production factors into a route according to the integrated two-term relationship, and will create a production system in which a plurality of production factors of various types are connected in series from a superordinate concept toward a subordinate concept thereof (production system creating means). In the created production system, the warehouse (β) lies in the top, and the plant (α), the product (P), the assembly drawing (a), the assembly process (h), the processing instruction (b), the part (C), the part (D), and the tool (F) are located in a line toward the lower level as shown in Fig. 8. The computer 11 stores the created production system in the storage unit or the hard disk (production system storing means), and outputs the created production system via the output device (production system outputting means).

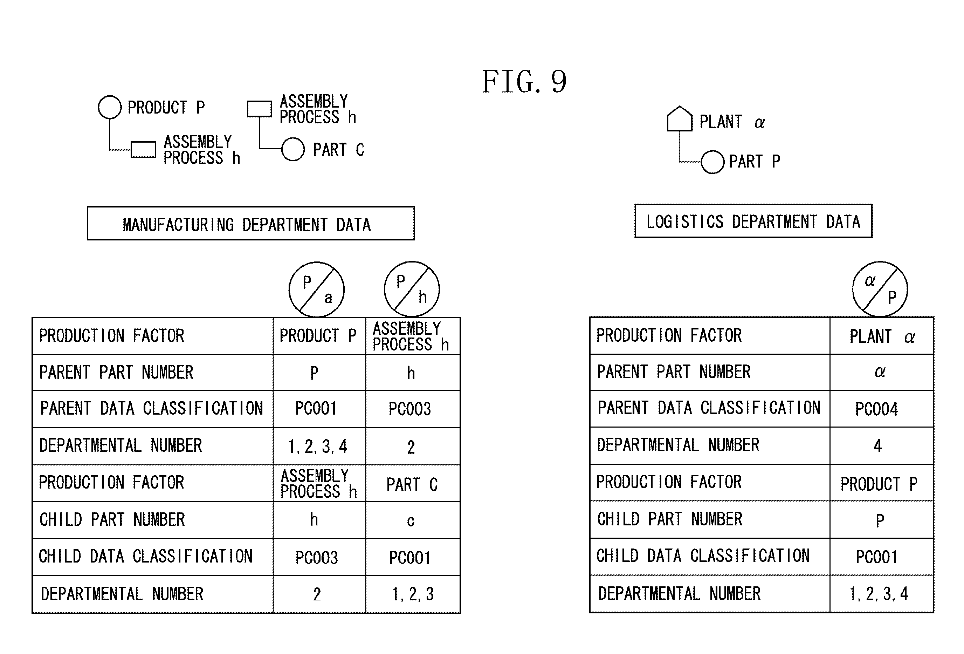

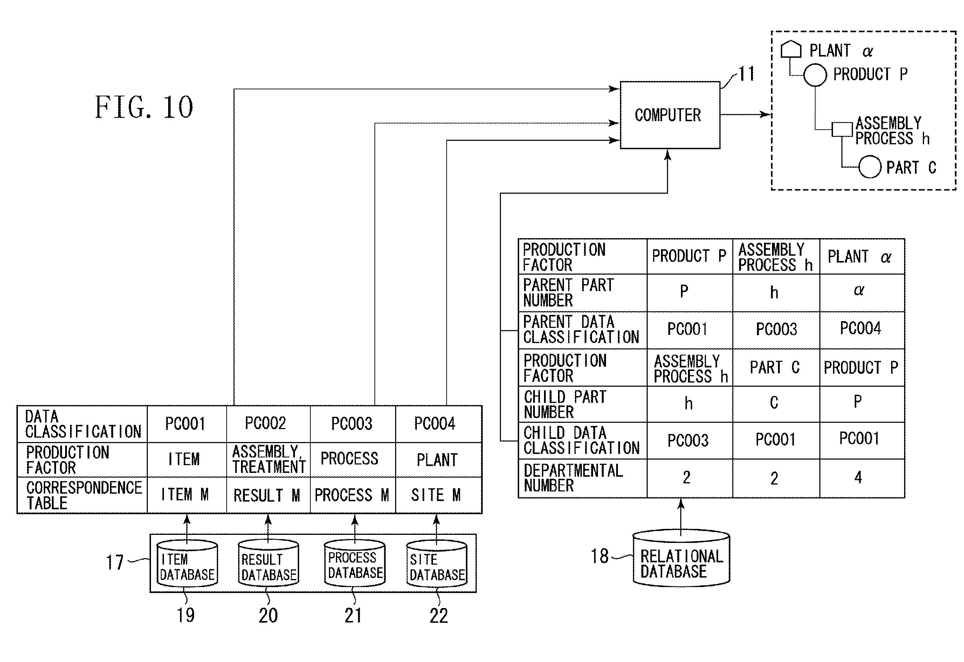

Fig. 9 is a view showing another example of the two-term relationships stored in the relational database 18, while Fig. 10 is a view for explaining integration of a plurality of two-term relationships of various types shown in Fig. 9. In the embodiments shown in Figs. 9 and 10, a part of the production factors are deleted (altered) from the main file of the factor-type database 17, and a part of the first production factors or the second production factors is deleted (altered) from the main file of the relational database 18. One example of deletion of the production factors for forming the production system will be described using a case in which the assembly drawing (a) and the part (D) are deleted from the state shown in Fig. 2 as an example as follows.

When a production factor deletion is selected from the items displayed on the display, a production factor deletion area (1) to a production factor deletion area (n) are displayed on the display. The assembly drawing (a) is inputted into the production factor deletion area (1), and the part (D) is inputted into the production factor deletion area (2). When a deletion instruction of the production factor is inputted from the input device after inputting these data into production factor deletion area, the computer 11 deletes the data of the assembly drawing (a) from the main file of the result database 20, and deletes the data of the part (D) from the main file of the item database 19. It is to be noted that the data of the assembly drawing (a) deleted from the main file of the result database 20 is stored into the subfile of the result database 20, and the data of the part (D) deleted from the main file of the item database 19 is stored into the subfile of the item database 19.

One example of deletion of the first and second production factors stored in the relational database 18 will be described using deletion of the two-term relationship between the product (P) (first production factor) and the assembly drawing (a) (second production factor) and deletion of the two-term relationship between the assembly process (h) (first production factor) and the part (D) (second production factor) as an example as follows. When a relation deletion is selected from the items displayed on the display, a relation deletion area (1) to a relation deletion area (n) will be displayed on the display. The product (P) and the assembly drawing (a) are inputted into the relation deletion area (1), and the assembly process (h) and the part (D) are also inputted into the relation deletion area (2). Once these data are inputted, the two-term relationship between the product (P) and the assembly drawing (a) will be displayed on the relation deletion area (1), and the two-term relationship between the assembly process (h) and the part (D) will be displayed on the relation deletion area (2). When a deletion instruction of the two-term relationship is inputted from the input device after inputting these data, the computer 11 deletes the two-term relationship between the product (P) and the assembly drawing (a) stored in the main file of the relational database 18 and also deletes the two-term relationship between the assembly process (h) and the part (D). It is to be noted that the two-term relationship between the product (P) and the assembly drawing (a) and the two-term relationship between the assembly process (h) and the part (D) are stored into the subfile of the relational database 18.

When creation of the production system is instructed via the input device after the production factor and the two-term relationship are deleted, the computer 11 uses remaining production factors to integrate new two-term relationships formed of the remaining first and second production factors, and re-creates a production system corresponding to each article according to the integrated two-term relationship. The computer 11 extracts the two-term relationship between the product (P) and the assembly process (h) from the relational database 18 as the manufacturing department data, while also interpreting the item number (PC001) of the parent data classification of the product (P) as the item data classification (PC001) (first factor-type number) of the item database 19 to extract the data of the product (P) from the item database 19 based on the parent part number (P) and the item data classification (PC001), and also interpreting the process number (PC003) of the child data classification of the assembly process (h) as the process data classification (PC003) (third factor-type number) of the process database 21 to extract the data of the assembly process (h) from the process database 21 based on the child part number (h) and the process data classification (PC003).

The computer 11 extracts the two-term relationship between the assembly process (h) and the part (C) from the relational database 18, and also interprets the item number (PC001) of the child data classification of the part (C) as the item data classification (PC001) (first factor-type number) of the item database 19 to extract data of the part (C) from the item database 19 based on the child part number (C) and the item data classification (PC001). The computer 11 extracts the two-term relationship between the plant (α) and the product (P) from the relational database 18 as the logistics department data, and interprets the site number (PC004) of the parent data classification of the plant (α) as the site data classification (PC004) (fourth factor-type number) of the site database 22 to extract data of the plant (α) from the site database 22 based on the parent part number (α) and the site data classification (PC004).

When extracting a plurality of two-term relationships of various types between the production factors from the relational database 18 and also extracting a plurality of production factors of various types for forming the two-term relationships from the factor-type database 17, the computer 11 determines that the products (P) in the two-term relationship between the plant (α) and the product (P) and the two-term relationship between the product (P) and the assembly process (h) are the same common production factor based on the data classification (PC001) and the part number (P), combines the products (P) in those two-term relationships, connects the product (P) to the lower level of the plant (α), and connects the assembly process (h) to the lower level of the product (P). Next, it determines that the assembly processes (h) in the two-term relationship between the product (P) and the assembly process (h) and the two-term relationship between the assembly process (h) and the part (C) are the same common production factor based on the data classification (PC003) and the part number (h), combines the assembly processes (h) in those two-term relationships, connects the assembly process (h) to the lower level of the product (P), and connects the part (C) to the lower level of the assembly process (h). As a result, a route (technical information route) in which the plant (α) lies at a higher level, the product (P) lies just below it, the assembly process (h) lies just below the product (P), and the part (C) lies just below the assembly process (h), is built, and these two-term relationships are integrated (two-term relationship integrating means).

When integrating the two-term relationships formed of the new first and second production factors, the computer 11 incorporates each of the production factors in a route according to the integrated two-term relationship, and creates a production system in which a plurality of production factors of various types are connected in series from a superordinate concept toward a subordinate concept thereof (production system creating means). In the newly created production system, the plant (α) lies at the top, and the product (P), the assembly process (h), and the part (C) are located in a line toward the lower level as shown in Fig. 10. The computer 11 stores the production system created after changing the production factors, and the first and second production factors stored in the storage unit or the hard disk (production system storing means), and outputs the created production system via the output device (production system outputting means).

In the production system creating system 10 and the production system creating method, the alteration of the production factors (change, addition, and deletion) can be managed in an integrated manner by the factor-type database 17, and the alteration of the two-term relationship according to the alteration (change, addition, deletion) of the first production factors or the second production factors can also be managed in an integrated manner by the relational database 18, thus allowing the new production system that can be shared by each of the departments 12, 13, 14, and 15 to be formed in real time after the alteration of the production factors stored in the factor-type database, and the first production factors or the second production factors stored in the relational database. In the production system creating system 10 and the production system creating method, it is not necessary for each of the departments 12, 13, 14, and 15 to independently alter the production factors, and the first production factors or the second production factors to thereby create and manage the production system, thus time and labor due to each of the departments 12, 13, 14, and 15 altering the production factors and altering the first production factors or the second production factors to be omitted.

## Claims

1. A production system creating system that creates a production system of an article from a combination of production factors branching from a superordinate concept toward a subordinate concept, wherein
the production factors are linked with each other by an upper/lower two-term relationship between an arbitrary first production factor and a second production factor lying just below it, and the system is provided with a factor-type database for storing a plurality of the production factors of different types and a relational database for storing a plurality of the two-term relationships of different types, and uses these production factors to execute production system creating means for creating production systems corresponding to the articles of various types,
wherein in the production system creating means, a plurality of two-term relationships of various types required for creating the production system are extracted from the relational database and a plurality of production factors of various types corresponding to the first and second production factors for forming the extracted two-term relationship are also extracted from the factor-type database, the two-term relationships extracted from the relational database are integrated, and the production factors extracted from the factor-type database are connected in series from a superordinate concept toward a subordinate concept thereof according to the two-term relationship thus integrated to thereby create production systems corresponding to the articles of various types.

2. The production system creating system according to claim 1, wherein
in the system, the factor-type database is classified into a plurality of first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationships are stored in the relational database; and
in the production system creating means, a plurality of production factors of various types corresponding to the first and second production factors for forming these extracted two-term relationships are extracted from the first to n-th factor-type databases based on the first to n-th factor-type numbers, and while the first to n-th factor-type numbers of the first and second production factors for forming these extracted two-term relationships are referred to, production factors of the same factor-type number in these two-term relationships are combined with each other to thereby integrate a plurality of the extracted two-term relationships of various types.

3. The production system creating system according to claim 1 or 2, wherein
in the system, first to n-th departmental numbers for sorting the production factors by department are individually set to these production factors, and departmental production system outputting means for outputting a departmental production system formed only of required production factors among the production systems created by the production system creating means is executed for every department; and
in the departmental production system outputting means, the first to n-th departmental numbers of a plurality of production factors of various types corresponding to the first and second production factors for forming these extracted two-term relationships are referred to, and a production system formed only of production factors corresponding to the same departmental number is outputted.

4. The production system creating system according to any one of claims 1 to 3,
wherein in the system, each of the production factors stored in the factor-type database can be altered and at least either of the first production factor and the second production factor stored in the relational database can be altered; and in the production system creating means, when each of the production factors stored in the factor-type database, and the first and second production factors stored in the relational database are altered, altered new production factors are used and new two-term relationships formed of the altered first and second production factors are used to thereby integrate the two-term relationships again, and production systems corresponding to the articles of various types are re-created according to the integrated two-term relationships.

5. A production system creating method that creates a production system of an article from a combination of various production factors branching from a superordinate concept toward a subordinate concept, the production system creating method comprising:
a factor-type database for storing a plurality of production factors of various types; and
a relational database for storing a plurality of two-term relationships of various types between the production factors linked by an upper/lower two-term relationship between an arbitrary first production factor and a second production factor lying just below it,
wherein a plurality of two-term relationships of various types required for creating the production system are extracted from the relational database and a plurality of production factors of various types corresponding to the first and second production factors for forming the extracted two-term relationships are also extracted from the factor-type database, the two-term relationships extracted from the relational database are integrated, the production factors extracted from the factor-type database are connected in series from a superordinate concept toward a subordinate concept thereof according to the integrated two-term relationship to thereby create production systems corresponding to the articles of various types, and the created production systems are stored and outputted.

6. The production system creating method according to claim 5, wherein
the factor-type database is classified into a plurality of first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationships are stored in the relational database; and
in the production system creating method, a plurality of production factors of various types corresponding to the first and second production factors for forming these extracted two-term relationships are extracted from the first to n-th factor-type databases based on the first to n-th factor-type numbers, and while the first to n-th factor-type numbers of the first and second production factors for forming these extracted two-term relationships are referred to, production factors of the same factor-type number in these two-term relationships are combined with each other to thereby integrate a plurality of the extracted two-term relationships of various types.

7. The production system creating method according to claim 5 or 6, wherein in the production system creating method, first to n-th departmental numbers for sorting the production factors by department are individually set to these production factors, the first to n-th departmental numbers of a plurality of production factors of various types corresponding to the first and second production factors for forming these extracted two-term relationships are referred to, and a departmental production system formed only of production factors corresponding to the same departmental number among the created production systems is outputted.

8. The production system creating method according to any one of claims 5 to 7,
wherein in the production system creating method, each of the production factors stored in the factor-type database can be altered and at least either of the first production factor and the second production factor stored in the relational database can be altered, and when each of the production factors stored in the factor-type database, and the first and second production factors stored in the relational database are altered, altered new production factors are used and new two-term relationships formed of the altered first and second production factors are used to thereby integrate the two-term relationships again, and production systems corresponding to the articles of various types are re-created according to the integrated two-term relationships.

9. A computer readable storage medium that stores a production system creating program for causing a computer to execute a production system creating method that creates a production system of an article from a combination of production factors branching from a superordinate concept toward a subordinate concept, wherein the production system creating method extracts a plurality of two-term relationships of various types required for creating the production system from a relational database for storing the two-term relationships between the production factors linked by an upper/lower two-term relationship between an arbitrary first production factor and a second production factor lying just below it and also extracts a plurality of production factors of various types corresponding to the first and second production factors for forming the extracted two-term relationships from the factor-type database for storing these production factors, integrates a plurality of two-term relationships of various types extracted from the relational database, connects these production factors extracted from the factor-type database in series from a superordinate concept toward a subordinate concept thereof according to the integrated two-term relationships to thereby create production systems corresponding to the articles of various types, and stores and outputs the created production systems.

10. The computer readable storage medium according to claim 9, wherein the computer readable storage medium stores the production system creating program for causing the computer to execute the production system creating method that extracts a plurality of production factors of various types corresponding to the first and second production factors for forming these extracted two-term relationships from the first to n-th factor-type databases based on first to n-th factor-type numbers individually set to these production factors, and while referring to the first to n-th factor-type numbers of the first and second production factors for forming these extracted two-term relationships, combines production factors of the same factor-type number with each other in these two-term relationships to thereby integrate a plurality of the extracted two-term relationships of various types.

11. The computer readable storage medium according to claim 9 or 10, wherein the computer readable storage medium stores the production system creating program for causing the computer to execute the production system creating method that refers to first to n-th departmental numbers set to a plurality of production factors of various types corresponding to the first and second production factors for forming these extracted two-term relationships, and outputs a departmental production system formed only of production factors corresponding to the same departmental number among the created production systems.

12. The computer readable storage medium according to any one of claims 9 to 11, wherein the computer readable storage medium stores the production system creating program for causing the computer to execute the production system creating method, in which when each of the production factors stored in the factor-type database, and the first and second production factors stored in the relational database are altered, altered new production factors are used and new two-term relationships formed of the altered first and second production factors are used to thereby integrate the two-term relationships again, and production systems corresponding to the articles of various types are re-created according to the integrated two-term relationships.
